# EUROPÄISCHE PATENTANMELDUNG

(11) **EP 1 426 802 A2**
(43) Veröffentlichungstag der Anmeldung: **09.06.2004**
(21) Anmeldenummer: 03027496.3
(22) Anmeldetag: 01.12.2003
(51) Int. Cl.: G02B 6/42

(54) **Vorrichtung zur Einkopplung von Licht in einen Lichtleiter**

(30) Priorität: 05.12.2002 DE 10257128
(71) Anmelder: Schott Glas, 55122 Mainz (DE)
(72) Erfinder: Ebbecke, Andreas, 76297 Stutensee-Büchig (DE)
(74) Vertreter: Schweiger, Martin, Dipl.-Ing.

(57) **Zusammenfassung**

Die Erfindung betrifft eine Vorrichtung (1) zur Einkopplung von Licht in einen Lichtleiter (3), mit einem optischen Lichtelement (2) zur Erzeugung des Lichts, vorzugsweise mit einer LED, welche einen mit einer Leuchtfläche (12) versehenen, ein Gehäuse (11) bildenden lichtleitenden Körper aufweist, in welchem photoelektrisches Material (8) in einem Reflektor (4) angeordnet und mit elektrischen Anschlüssen (7, 9) zur Energieversorgung verbunden ist, und einer Lichtaufnahmefläche (13) am Lichtleiter (3), auf welche das Licht projizierbar ist.

Erfindungsgemäß wird vorgeschlagen, dass die Leuchtfläche (12) das Gehäuse (11) einen unmittelbar mit der Aufnahmefläche (13) des Lichtleiters (3) korrespondierenden Kopplungsbereich (16) aufweist, welcher frei von zusätzlichen optischen Elementen ist und dass die Reflexionsfläche (17) des Reflektors (4) das Licht auf den Kopplungsbereich (16) der Leuchtfläche (12) des Gehäuses (11) und/oder auf die Aufnahmefläche (13) des Lichtleiters (3) fokussiert.

Somit wird erreicht, dass mittels Reflektor (4) das vom photoelektrischen Material emittierte Licht lediglich auf den Kopplungsbereich (16) gestrahlt und in die Aufnahmefläche (13) des Lichtleiters (3) eingekoppelt wird, so dass die Kopplungseffizienz erhöht wird und kostengünstig Lichtleiter (3) mit kleinen Durchmessern einsetzbar sind.

## Beschreibung

Die Erfindung betrifft eine Vorrichtung zur Einkopplung von Licht in einen Lichtleiter mit einem optischen Lichtelement zur Erzeugung des Lichts, welche einen mit einer Leuchtfläche versehenen, ein Gehäuse bildenden lichtleitenden Körper aufweist, in welchem photoelektrisches Material in einem Reflektor angeordnet und mit elektrischen Anschlüssen zur Energieversorgung verbunden ist, und einer Lichtaufnahmefläche am Lichtleiter, auf welche das Licht projizierbar ist. Des Weiteren ist eine Leuchtdiode zur Verwendung in der Vorrichtung, mit einem elektrische Anschlüsse aufweisenden Sockel, welcher in Leuchtrichtung als Reflektor mit einer Reflexionsfläche ausgebildet ist, und einem das im Reflektor angeordnete und mit den Anschlüssen verbundenen photoelektrische Material umschließenden Gehäuse, welches mit dem Sockel verbunden ist und eine Leuchtfläche aufweist, von der Erfindung umfasst.

Vorrichtungen und Leuchtdioden der vorbeschriebenen Art sind im Stand der Technik bereits offenbart. Vorrichtungen der genannten Art werden in der Nachrichtentechnik in Verbindung mit optischen Leitern, wie Glas- oder Kunststofffasern, zur Datenübertragung genutzt. Dabei werden elektronische Signale von dem optischen Lichtelement, vorzugsweise von Laserdioden oder LEDs, in Lichtimpulse umgewandelt und in den optischen Leiter eingespeist. Über den optischen Leiter können die Daten somit zur Weiterverarbeitung an ein Endgerät übertragen werden, wo sie in der Regel durch eine Rückübertragung mittels Photodioden als elektronische Signale wieder in eine elektronische Schaltungen eingeleitet oder unmittelbar als Licht beispielsweise zur Beleuchtung verwendet werden.

Derartige Systeme haben sich für die Datenübertragung in Netzwerken aber auch für die Beleuchtungstechnik bewährt und werden sowohl in Maschinen, insbesondere in Kraftfahrzeugen, als kleine Netzwerke, aber auch in der Nachrichtentechnik sowie in verschiedenen anderen technischen Bereichen eingesetzt, da die Übertragung von Licht in Lichtleitern weitgehend frei von elektromagnetischen, thermischen und ähnlichen Störungen ist.

Die Leuchtdioden des Standes der Technik weisen üblicherweise einen mit elektrischen Anschlüssen versehenen Sockel auf. Der Sockel ist in Leuchtrichtung als Reflektor mit einer Reflexionsfläche ausgebildet. In dem Reflektor ist photoelektrisches Material angeordnet, welches für die Energieversorgung mit den elektrischen Anschlüssen des Sockels verbunden ist. Der Sockel ist des Weiteren zumindest teilweise von einem Gehäuse umschlossen, in welchem der Reflektor mit dem photoelektrischen Material sowie dessen Anschlussverbindungen aufgenommen sind. Das Gehäuse weist eine Leuchtfläche auf, über welche das emittierte Licht zum Lichtleiter gestrahlt wird.

Je nach Zweck oder technischem Einsatzgebiet der Lichtübertragung sind dabei als Lichtleiter Single-Mode-Fasern (SMF), insbesondere Faserbündel aus SMF, aber auch einzelne Fasern mit größerer Dimensionierung aus Glas oder Kunststoff einsetzbar.

Als problematisch hat sich bei derartigen Vorrichtungen stets die Schnittstelle zwischen dem lichterzeugenden Lichtelement und dem optischen Leiter dargestellt, da dort erhebliche Energieverluste entstehen können. Verschiedene Vorrichtungen sind im Stand der Technik vorgeschlagen worden, um die Einkopplung des aus dem Lichtelement emittierten Lichts in eine Faseranordnung zu optimieren. Die bekannten Vorrichtungen nutzen dabei Anordnungen von Linsen beziehungsweise Blenden, welche sowohl in das Gehäuse beziehungsweise in die Aufnahmefläche des Lichtleiters integriert, als auch gesondert angeordnet sein können. Diese Anordnungen bündeln das von der Leuchtfläche des Gehäuses abgestrahlte Licht auf die Aufnahmefläche des Lichtleiters, so dass möglichst viel Licht in einem vorbestimmten Winkel in den Lichtleiter eingespeist werden kann.

In der DE 695 12 347 T2 ist eine Anordnung eines Anschlusses für einen Lichtwellenleiter mit einer verbesserten Aufnahmefläche beschrieben. Dabei wird eine teilweise kugelförmig ausgebildete Linse in die Aufnahmefläche des Lichtleiters integriert. Die DE 698 02 293 T2 schlägt eine Anordnung vor, welche wenigstens eine Linse zwischen der Leuchtfläche des Lichtelements und der Aufnahmefläche des Lichtleiters aufweist. Beide Anordnungen des Standes der Technik weisen den Nachteil auf, dass die Herstellung erheblichen Aufwand und somit Kosten erzeugt und die Kopplung zwischen Lichtelement und Lichtleiter bereits wegen der kleinen Dimensionierung der Linsen eine erhebliche Anfälligkeit für Beschädigungen aufweist. Darüber hinaus ist die Effizienz der Anordnungen wegen der Energieverluste an den zusätzlichen optischen Elementen im Strahlengang beeinträchtigt.

Es hat sich des Weiteren gezeigt, dass bei den Vorrichtungen des Standes der Technik zur optimalen Einkopplung des Lichts, der Lichtleiter zumindest einen ähnlichen, wenn nicht größeren Durchmesser aufweisen muss, als das Gehäuse der Leuchtdiode, da ansonsten das an der Leuchtfläche zur Verfügung stehende Licht nicht vollständig in den Lichtleiter eingekoppelt werden kann und somit zusätzliche Energieverluste auftreten.

Aufgabe der Erfindung ist es folglich, die beschriebenen Nachteile des Standes der Technik zu vermeiden und insbesondere eine Vorrichtung zur Verfügung zu stellen, welche eine effiziente Einkopplung von Licht aus dem Lichtelement in den Lichtleiter gewährleistet und mit welcher eine Reduzierung des Durchmessers des verwendeten Lichtleiters möglich ist. Des Weiteren ist Aufgabe der Erfindung, eine dementsprechende Leuchtdiode zur Verwendung in der erfindungsgemäßen Vorrichtung bereitzustellen.

Eine Lösung wird erfindungsgemäß dadurch bereitgestellt, dass die Leuchtfläche des Gehäuses einen unmittelbar mit der Aufnahmefläche des Lichtleiters korrespondierenden Kopplungsbereich aufweist, welcher frei von zusätzlichen optischen Elementen ist und dass die Reflexionsfläche des Reflektors das Licht auf den Kopplungsbereich der Leuchtfläche des Gehäuses und/oder auf die Aufnahmefläche des Lichtleiters fokussiert. Durch die erfindungsgemäße Anordnung wird erreicht, dass mittels Reflektor das vom photoelektrischen Material emittierte Licht lediglich auf einen Teil der Leuchtfläche des Gehäuses, dem Kopplungsbereich, gestrahlt wird. Der Kopplungsbereich ist dabei der Aufnahmefläche des Lichtleiters zugeordnet, wobei der Durchmesser des Lichtleiters im Wesentlichen die Abmessungen des Kopplungsbereichs aufweist, wobei der optimale Lichtleiter einen etwas größeren Durchmesser aufweist als der Kopplungsbereich.

Durch den Reflektor wird das Licht in einer Weise noch im Gehäuse der Leuchtdiode an der Reflexionsfläche reflektiert, dass es im Kopplungsbereich der Leuchtfläche fokussiert wird. Von dem unmittelbar mit der Aufnahmefläche am Kopplungsbereich angeordneten Lichtleiter wird das Licht somit mit maximaler Strahlungsenergie aufgenommen, ohne dass es zu unnötigen Verlusten kommt.

Hierzu ist erfindungsgemäß des Weiteren vorgesehen, dass die Reflexionsfläche des Reflektors eine Geometrie aufweist, durch welche das vom photoelektrischen Material emittierte Licht in einem vorbestimmten Winkel auf den Kopplungsbereich der Leuchtfläche und/oder auf die Aufnahmefläche des Lichtleiters projiziert wird, vorzugsweise in einem zur Aufnahme in den Lichtleiter optisch günstigsten Winkel. Da bei ungünstigen Einstrahlwinkeln das auf die Aufnahmefläche treffende Licht reflektiert würde, ist erfindungsgemäß vorgesehen, dass das Licht durch eine vorbestimmte Ausgestaltung der Reflexionsfläche in einem für den Lichteintritt optimalen Winkel auf die Aufnahmefläche des Lichtleiters projizierte wird. Hierdurch kann auf zusätzliche optische Elemente zur Korrektur des Lichtstrahls verzichtet werden, wodurch sowohl eine aufwendige Herstellung der Vorrichtung, als auch eine Verringerung der in den Lichtleiter eingespeisten Lichtleistung durch die zusätzlichen Elemente vermieden werden kann. Zur Ermittlung der optimalen Reflektorgeometrie sind mathematische Modelle bekannt, mit denen unter Einbeziehung der Abmessungen der betroffenen Teile der Leuchtdiode und der Anordnung und Dimensionierung des Lichtleiters sowie des Lichtspektrums geeignete Reflexionsflächen ermittelbar sind.

Es hat sich dabei als vorteilhaft erwiesen, dass die Reflexionsfläche des Reflektors parabolisch oder elliptisch ausgebildet ist. In vorteilhafter Weise wird mit dieser Form der Reflexionsfläche erreicht, dass der Öffnungswinkel des Lichtstrahls und dadurch gleichzeitig der Kopplungsbereich der Leuchtfläche klein gehalten werden kann. Somit sind auch Lichtleiter mit kleinen Durchmessern einsetzbar, was erhebliche Kostenvorteilen gegenüber den Vorrichtungen des Standes der Technik bringt.

Mit einer erfindungsgemäßen Weiterbildung ist vorgesehen, dass der Kopplungsbereich eine im Wesentlichen ebene, mit der Öffnung des Reflektors korrespondierende Fläche bildet und dass die Aufnahmefläche des Lichtleiters planparallel dem Kopplungsbereich zugeordnet ist. Der Kopplungsbereich und die Aufnahmefläche können dabei unmittelbar aneinander anliegen. Es ist jedoch auch möglich, dass zwischen diesen Kopplungsflächen ein Zwischenraum angeordnet ist, welcher ein transparentes Medium, wie beispielsweise Luft, enthält. Dabei ist vorgesehen, dass sich der Kopplungsbereich in unmittelbarer Nähe der Öffnung des Reflektors befindet. Es hat sich als vorteilhaft erwiesen, den Kopplungsbereich unmittelbar an der Öffnung des Reflektors anzuordnen, so dass möglichst wenig des aus dem Reflektor gestrahlten Lichts verloren geht.

Als besonders geeignet hat sich dabei erwiesen, dass der Lichtleiter wenigstens eine optische Faser, vorzugsweise aus Glas- oder Kunststoff, umfasst. Erfindungsgemäß, insbesondere für Beleuchtungszwecke, kann eine Einzelfaser verwendet werden. Besonders vorteilhaft haben sich Bündel von Glas- oder Kunststofffasern erwiesen, die endseitig eine gemeinsame Aufnahmefläche zur Aufnahme des Lichts bilden.

Es ist weiter vorgesehen, dass der Durchmesser des Lichtleiters mit der Fläche des Kopplungsbereichs korrespondiert. Dabei weist der Lichtleiter vorzugsweise einen etwas größeren Durchmesser auf, als es durch den Öffnungswinkel des Reflektors beziehungsweise durch den Kopplungsbereich vorgegeben ist. Somit ist gewährleistet, dass die Lichtverluste durch Streustrahlung gering bleiben.

Eine erfindungsgemäße Ausführungsform wird dadurch bereitgestellt, dass das Leuchtelement zur Erzeugung des Lichts eine Leuchtdiode (LED) ist.

Die Erfindung umfasst des Weiteren eine Leuchtdiode zur Verwendung in der Vorrichtung. Die Leuchtdiode weist einen Sockel auf, welcher in Leuchtrichtung als Reflektor mit einer Reflexionsfläche ausgebildet ist. In der anderen Richtung weist der Sockel in der Regel Anschlüsse auf, mit denen die Leuchtdiode an den dafür vorgesehenen elektronischen Bauteilen, wie Platinen und dergleichen befestigbar ist. In dem Reflektor ist photoelektrisches Material angeordnet und mit den Anschlüssen verbundenen. Diese Anordnung wird von einem lichtleitenden Körper umschlossen, welcher ein Gehäuse bildet, das die Leuchtfläche aufweist.

Erfindungsgemäß ist vorgesehen, dass die Reflexionsfläche des Reflektors durch den Sockelrand begrenzt ist und dass der Kopplungsbereich der Leuchtfläche im kleinstmöglichen Abstand vom Sockelrand, vorzugsweise als ebene Fläche parallel zur Reflektoröffnung, ausgebildet ist. Mit dieser vorteilhaften Ausgestaltung wird gewährleistet, dass die Leuchtfläche des Gehäuses für die Kopplung mit dem Lichtleiter in optimaler Weise vor der Reflektoröffnung angeordnet ist. Es kann somit gewährleistet werden, dass die Verbindungsdrähte zwischen photoelektrischem Material und den Anschlüssen des Sockels im Gehäuse eingegossen und somit geschützt sind. Außerdem wird erreicht, dass die Verluststrahlung durch Streuung im Gehäuse der Leuchtdiode gering bleibt, da der Strahlungsweg im Gehäuse klein ist. Die erfindungsgemäße Leuchtdiode ist einfach mit konventionellen Mitteln und somit kostengünstig herstellbar.

Die Erfindung wird im folgenden anhand der Zeichnung erläutert. Es zeigt
Figur 1 die erfindungsgemäße Vorrichtung mit konventionellem Reflektor;
Figur 2 die erfindungsgemäße Vorrichtung mit modifiziertem Reflektor;
Figur 3 eine Vorrichtung nach dem Stand der Technik.

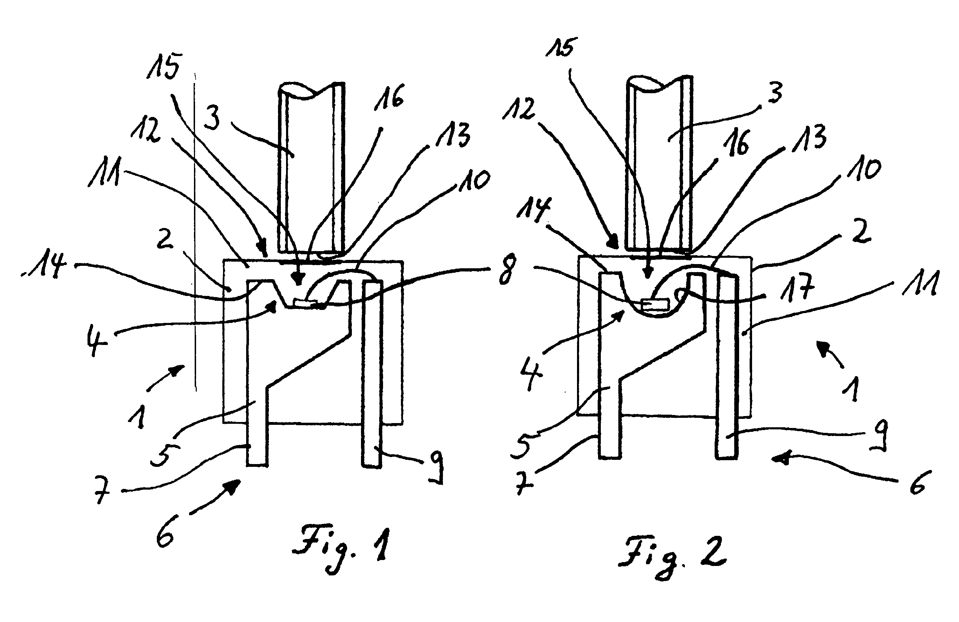

In Figur 1 ist die erfindungsgemäße Vorrichtung 1 mit einer LED 2 sowie einem Lichtleiter 3 dargestellt. Die LED 2 weist einen konventionellen Reflektor 4 auf, welcher trichterförmig ausgestaltet ist. Der Reflektor 4 ist einstückig an einem ersten Teil 5 des Sockels 6 der LED 2 ausgestaltet, der auf der dem Reflektor 4 entgegengesetzten Seite als elektrischer Anschluss 7 ausgebildet ist.

In dem Reflektor 4 ist ein Leuchtchip 8 mit photoelektrischem Material angeordnet, welches bei Versorgung mit Energie Licht emittiert. Das photoelektrische Material ist einerseits über den Reflektor 4 mit dem Anschluss 7 elektrisch leitend verbunden. Andererseits ist es mit einem Anschluss 9 elektrisch leitend verbunden, wobei hierzu ein Verbindungsdraht 10 vorgesehen ist, mit dem die elektrische Verbindung zwischen dem Anschluss 9 der LED 2 und dem photoelektrischen Material hergestellt ist.

Die beiden Anschlüsse 7 und 9 sind fest miteinander in einem Gehäuse 11 angeordnet, vorzugsweise werden sie in dem Gehäuse 11 eingegossen. Das Gehäuse 11 besteht aus transparenten, lichtleitenden Material, vorzugsweise Kunststoff oder Glas.

Das Gehäuse 11 weist eine Leuchtfläche 12 auf, welcher eine Aufnahmefläche 13 des Lichtleiters 3 zugeordnet ist. Die Leuchtfläche 12 ist erfindungsgemäß eine im Wesentlichen plane Fläche, welche in unmittelbarer Nähe des Sockelrands 14 angeordnet ist, der durch den Rand der Reflektoröffnung 15 gebildet wird.

Die Leuchtfläche 12 weist einen Kopplungsbereich 16 auf, dem die Aufnahmefläche 13 des Lichtleiters 3 gegenüber angeordnet ist. Vorzugsweise liegt die Aufnahmefläche 13 unmittelbar an diesem Kopplungsbereich 16 an. Der Kopplungsbereich 16 wird dabei durch die Strahlgeometrie des vom Reflektor 4 auf die Leuchtfläche 12 reflektierten Lichts gebildet. Die Dimensionierung des Kopplungsbereichs 16 wird somit unmittelbar durch die Geometrie des Reflektors 4 vorgegeben, welche den Öffnungswinkel des Lichtstrahls bestimmt.

Bei der erfindungsgemäßen Ausgestaltung der Vorrichtung 1 hat sich als besonders vorteilhaft erwiesen, dass die in den Lichtleiter 3 einkoppelbare Lichtmenge erhöht werden kann, da die Verluste, welche sich überwiegend als Streuverluste im Gehäuse 11 darstellen, auf Grund des kurzen Weges zwischen dem Sockelrand 14 und dem Kopplungsbereich 16 der Leuchtfläche 12 besonders effizient gering gehalten werden können. Dadurch ist eine Erhöhung der Effizienz der Einkopplung des Lichts in den Lichtleiter 3 um zumindest das Doppelte möglich.

Der Reflektor 4 hat die Aufgabe, das vom Leuchtchip 8 in alle Richtungen ausgesandte Licht nur in eine Richtung zu lenken. Dabei ergibt sich bei der dargestellten trichterförmigen Reflektorfläche 17 eine Strahlgeometrie mit einem Öffnungswinkel von etwa 150° Vollwinkel. Der Reflektor 4 hat üblicherweise einen Öffnungsdurchmesser von 1 mm und das Gehäuse 11, welches vorzugsweise als Kunststoffummantelung ausgestaltet ist, weist etwa einen Durchmesser von 5 mm auf.

Die Kunststoffummantelung selbst aber auch der Zwischenraum zwischen Kopplungsbereich 16 und Aufnahmefläche 13 des Lichtleiters 3 kann erfindungsgemäß linsen- und blendenfrei ausgeführt sein, so dass bei herkömmlichen Dimensionierungen des Sockels 4 und des Gehäuses 11 der LED 1 der emittierte Lichtstrahl einen Strahldurchmesser im Kopplungsbereich 14 aufweist, der etwa dem Öffnungsdurchmesser der Reflektoröffnung entspricht.

Von Vorteil ist dabei erfindungsgemäß, dass der Durchmesser des Lichtleiters 3 entsprechend klein dimensioniert werden kann, wodurch erhebliche Materialeinsparungen gegenüber konventionellen Vorrichtungen dieser Art möglich sind.

In Figur 2 ist die erfindungsgemäße Vorrichtung 1 mit einer modifizierten Reflektorfläche 17 dargestellt. Die Reflektorfläche 17 ist dabei parabolisch ausgestaltet, wodurch eine Verringerung des Öffnungswinkels des Lichtstrahls möglich ist. Erfindungsgemäß kann somit erreicht werden, dass ein weitaus größerer Anteil des emittierten Lichtes in den Lichtleiter 3 eingekoppelt wird.

Im Gegensatz zu der konventionellen, trichterförmigen Reflektorfläche 17 kann somit mehr als 50% des auf die Leuchtfläche 12 gestrahlten Lichts in den Lichtleiter 3 eingekoppelt werden, wodurch der Wirkungsgrad der Vorrichtung 1 weiter verbessert werden kann. Darüber hinaus ist es möglich große Durchmesser der Lichtleiter 3, welche zum einem hohe Materialkosten zur Folge haben und die mit einer entsprechenden Verringerung der Leuchtdichte einhergehen, weiter zu reduzieren. Dies wird dadurch erreicht, dass der Kopplungsbereich 16 durch die gewählte Geometrie des Reflektors 4 beziehungsweise der Reflexionsfläche 17 verkleinert wird. Dadurch wird es möglich, bei gleichzeitiger Erhöhung der Leuchtdichte das von der erfindungsgemäßen LED 2 abgestrahlte Licht auf einen möglichst kleinen Durchmesser zu fokussieren.

Von besonderem Vorteil ist dabei, dass Lichtleiter 3 mit einem Durchmesser im Bereich von 1 mm genutzt werden können, wobei im Wesentlichen das gesamte von dem photoelektrischen Material ausgesandte Licht in den Lichtleiter 3 eingekoppelt werden kann. Kleinere Durchmesser der Lichtleiter 3 können bei entsprechender Dimensionierung der notwendigen Größe des Leuchtchips 8 beziehungsweise der mindestens notwendigen Menge an photoelektrischem Material ebenfalls realisierbar sein.

Selbstverständlich lässt sich die erfindungsgemäße Vorrichtung durch herkömmliche Anordnungen zusätzlicher Linsen oder Reflektoren optimieren, welche in den Strahlengang zwischen dem photoelektrischen Material und der Aufnahmefläche 13 des Lichtleiters 3 eingefügt werden. Es hat sich jedoch gezeigt, dass die herstellungstechnischen Vorteile, insbesondere dass eine hohe Einkoppeleffizienz ohne zusätzliche Maßnahmen erreichbar ist, gegenüber dieser weiteren Optimierung überwiegen.

Die erfindungsgemäße Vorrichtung 1 kann zur Beleuchtung kleiner Bündeldurchmesser genutzt werden. Es ist dabei möglich durch mehrarmige Reflektoranordnungen, die in einem gemeinsamen Ende münden, in diesem Endpunkt hohe Leuchtdichten zu realisieren. Des Weiteren ist es möglich, durch die Verwendung von verschiedenen beziehungsweise verschieden farbigen LEDs beliebige spektrale Kombinationen auf dem Kopplungsbereich 16 der Leuchtfläche 13 abzubilden.

Durch die erfindungsgemäße Vorrichtung 1 können die Vorteile gegenüber der direkten Nutzung von LEDs zur Beleuchtung weiter ausgebaut werden, wobei der Vorteil der örtlichen Trennung von Lichterzeugung und Lichtnutzung auch bei dem Erfordernis größere Lichtintensitäten beziehungsweise höherer Effizienz der Lichtausbeute genutzt werden kann.

Durch die Vermeidung von zusätzlichen optischen Bauteilen, ist des Weiteren eine höhere Lichtausbeute möglich. Zusätzlich kommt es zu einer Kostensenkung durch eine Reduzierung der Abmessungen der einzusetzenden Komponenten der Vorrichtung 1, insbesondere der Lichtleiter 3.

Durch die Kombination der erfindungsgemäßen Vorrichtung 1 mit faseroptischen Bauteilen, ist es außerdem möglich, die Anordnung der LEDs von der Anordnung der Nutzlichtpunkte unabhängig zu machen. Dabei kann eine einfache LED-Matrix hergestellt werden, die als standardisierte Lichtquelle in Serie produzierbar ist. Unabhängig von der Anordnung der als Nutzlicht verwendeten Lichtleiterenden, welche an dem der Kopplungsvorrichtung 1 entgegengesetzten Ende des Lichtleiters 3 angeordnet sind, kann die LED-Matrix erforderlichenfalls ohne weiteres ausgetauscht werden.

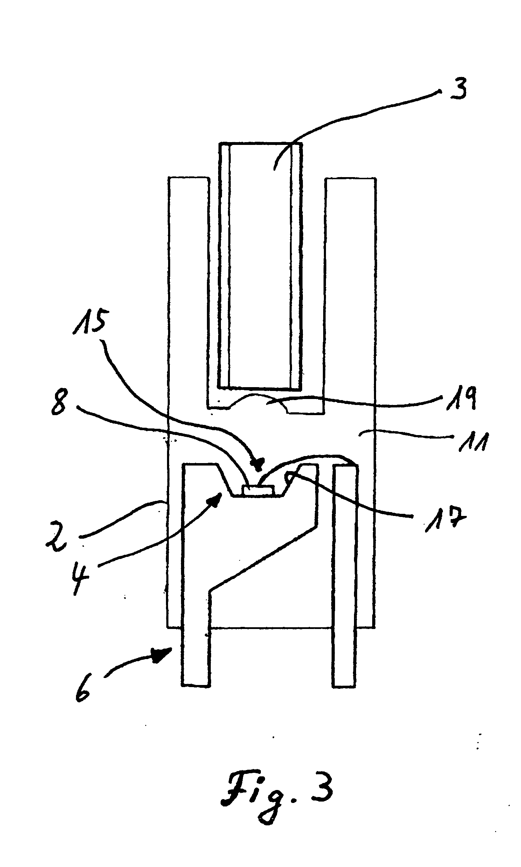

Figur 3 zeigt eine Vorrichtung 1 zur Kopplung von LEDs 2 mit einem Lichtleiter 3 nach dem Stand der Technik. Dabei wird das von der Leuchtdiode 2 emittierte Licht in einer einzelnen Glasfaser als Lichtleiter 3 übertragen. Die Schnittstelle zwischen LED 2 und Glasfaser 3 ist dabei so ausgeformt, das über dem Leuchtchip 8 eine Linse 19 in die Kunststoffhülle des Gehäuses 11 integriert ist, die das Licht in den Lichtleiter 3 bündelt.

Die Zeichnung stellt eine Standard-LED aus der Nachrichtentechnik dar. Unten befindet sich der Sockel 6, in dem der Leuchtchip 8 in einer trichterförmigen Vertiefung des Reflektors 4 integriert ist. Das von dem Leuchtchip 8 emittierte Licht wird an der Reflexionsfläche 17, welche durch die Wände der Vertiefung gebildet ist, so reflektiert, dass das gesamte von der LED 2 emittierte Licht in einem Öffnungswinkel von etwa 150° Vollwinkel zur Öffnung 15 des Reflektors 4 gelenkt wird. In einem Abstand über der Vertiefung befindet sich eine Kunststoffschicht. Auf der Kunststoffschicht befindet sich eine Kunststofflinse 19, die das in ihrem Bereich einfallende Licht bündelt. Das von der Linse 19 gebündelte Licht wird dann in den Lichtleiter 3 eingekoppelt, der direkt oberhalb der Linse 19 aufsitzt.

In der Beleuchtungstechnik wird nicht nur eine einzelne Glasfaser 3 von einer LED beleuchtet, sondern ein ganzes Bündel Glasfasern, die als Lichtleiter 3 dienen. Dabei werden entweder einzelne LEDs 2 oder zusammengeschaltete LED-Cluster mit zusätzlichen Linsen 19 oder Reflektoren 4 verwendet.

Durch den großen Abstand der Linse 19 von der Reflektoröffnung 15 sind erhebliche Lichtverluste bedingt, wobei das Licht in das Gehäuse 11 der LED 2 gestreut wird. Darüber hinaus treten außerdem Lichtverluste durch den erhöhten Lichtweg bis zur Leuchtfläche beziehungsweise dem m Kopplungsbereich im Gehäusematerial auf.

Diese Einschränkungen können mit der erfindungsgemäßen Vorrichtung 1 gemäß Fig. 1 und 2 deutlich reduziert werden.

### Vorrichtung zur Einkopplung von Licht in einen Lichtleiter

### Bezugszeichenliste

- 1: Vorrichtung
- 2: LED
- 3: Lichtleiter
- 4: Reflektor
- 5: erster Teil des Sockels
- 6: Sockel
- 7: Anschluss
- 8: Leuchtchip mit photoelektrischem Material
- 9: Anschluss
- 10: Verbindungsdraht
- 11: Gehäuse
- 12: Leuchtfläche
- 13: Aufnahmefläche
- 14: Sockelrand
- 15: Reflektoröffnung
- 16: Kopplungsbereich
- 17: Reflexionsfläche
- 18: Zwischenraum
- 19: Linse gemäß Stand der Technik

## Patentansprüche

1. Vorrichtung (1) zur Einkopplung von Licht in einen Lichtleiter (3) mit einem optischen Lichtelement (2) zur Erzeugung des Lichts, welche einen mit einer Leuchtfläche (12) versehenen, ein Gehäuse (11) bildenden lichtleitenden Körper aufweist, in welchem photoelektrisches Material (8) in einem Reflektor (4) angeordnet und mit elektrischen Anschlüssen (7, 9) zur Energieversorgung verbunden ist, und einer Lichtaufnahmefläche (13) am Lichtleiter (3), auf welche das Licht projizierbar ist,
**dadurch gekennzeichnet,**
**dass** die Leuchtfläche (12) des Gehäuses (11) einen unmittelbar mit der Aufnahmefläche (13) des Lichtleiters (3) korrespondierenden Kopplungsbereich (16) aufweist, welcher frei von zusätzlichen optischen Elementen ist und dass die Reflexionsfläche (17) des Reflektors (4) das Licht auf den Kopplungsbereich (16) der Leuchtfläche (12) des Gehäuses (11) und/oder auf die Aufnahmefläche (13) des Lichtleiters (3) fokussiert.

2. Vorrichtung (1) nach Anspruch 1,
**dadurch gekennzeichnet,**
**dass** die Reflexionsfläche (17) des Reflektors (4) eine Geometrie aufweist, durch welche das vom photoelektrischen Material (8) emittierte Licht in einem vorbestimmten Winkel auf den Kopplungsbereich (16) der Leuchtfläche (12) und/oder auf die Aufnahmefläche (13) des Lichtleiters (3) projiziert wird, vorzugsweise in einem zur Aufnahme in den Lichtleiter (3) optisch günstigsten Winkel.

3. Vorrichtung (1) nach Anspruch 1 oder 2,
**dadurch gekennzeichnet,**
**dass** die Reflexionsfläche (17) des Reflektors (4) parabolisch oder elliptisch ausgebildet ist.

4. Vorrichtung (1) nach einem oder mehreren der Ansprüche 1 bis 3,
**dadurch gekennzeichnet,**
**dass** der Kopplungsbereich (16) eine im Wesentlichen ebene, mit der Öffnung (15) des Reflektors (4) korrespondierende Fläche bildet und dass die Aufnahmefläche (13) des Lichtleiters (3) planparallel dem Kopplungsbereich (16) zugeordnet ist.

5. Vorrichtung (1) nach einem oder mehreren der Ansprüche 1 bis 4,
**dadurch gekennzeichnet,**
**dass** der Lichtleiter (3) wenigstens eine optische Faser, vorzugsweise aus Glasoder Kunststoff, umfasst.

6. Vorrichtung (1) nach einem oder mehreren der Ansprüche 1 bis 5,
**dadurch gekennzeichnet,**
**dass** der Durchmesser des Lichtleiters (3) mit der Fläche des Kopplungsbereichs (16) korrespondiert.

7. Vorrichtung (1) nach einem oder mehreren der Ansprüche 1 bis 6,
**dadurch gekennzeichnet,**
**dass** das Leuchtelement (2) zur Erzeugung des Lichts eine Leuchtdiode (LED) ist.

8. Leuchtdiode (2) zur Verwendung in einer Vorrichtung (1) nach einem oder mehreren der Ansprüche 1 bis 7, mit einem elektrische Anschlüsse (7, 9) aufweisenden Sockel (6), welcher in Leuchtrichtung als Reflektor (4) mit einer Reflexionsfläche (17) ausgebildet ist, und mit einem ein Gehäuse (11) bildenden, lichtleitenden Körper, welches mit dem Sockel (6) verbunden ist und eine Leuchtfläche (12) aufweist und welches das im Reflektor (4) angeordnete und mit den Anschlüssen (7, 9) verbundenen photoelektrische Material (8) umschließt,
**dadurch gekennzeichnet,**
**dass** die Reflexionsfläche (17) des Reflektors (4) durch den Sockelrand (14) begrenzt ist und dass der Kopplungsbereich (16) der Leuchtfläche (12) im kleinstmöglichen Abstand vom Sockelrand (14), vorzugsweise als ebene Fläche parallel zur Reflektoröffnung (15), ausgebildet ist.
